# EUROPEAN PATENT SPECIFICATION

(11) **EP 3 752 960 B1**
(45) Date of publication and mention of the grant of the patent: **08.07.2026**
(21) Application number: 18816099.8
(22) Date of filing: 18.12.2018
(51) Int. Cl.: G06V 20/66, B07C 5/342, B65B 57/14, G01N 21/958, G06T 7/55

(54) **A METHOD AND APPARATUS FOR THE DETECTION OF AN OUTLINE, AND FOR LOCATING A THREE-DIMENSIONAL PRODUCT RESTING IN AN UPRIGHT POSITION OR AN UPSIDE DOWN POSITION ON A SURFACE**
VERFAHREN UND VORRICHTUNG ZUR ERKENNUNG EINES UMRISSES UND ZUR ORTUNG EINES DREIDIMENSIONALEN PRODUKTS, DAS IN EINER AUFRECHTEN POSITION ODER EINER UMGEDREHTEN POSITION AUF EINER OBERFLÄCHE RUHT
PROCÉDÉ ET APPAREIL DE DÉTECTION DE CONTOUR, ET DE LOCALISATION D'UN PRODUIT TRIDIMENSIONNEL REPOSANT DANS UNE POSITION VERTICALE OU UNE POSITION RENVERSÉE SUR UNE SURFACE

(30) Priority: 13.02.2018 FR 1851178
(43) Date of publication of application: 23.12.2020
(73) Proprietor: Pharmed S.A.M., 98000 Monaco (MC)
(72) Inventor: MATHERET, Christian, 06700 Saint Laurent Du Var (FR)
(74) Representative: Novagraaf Technologies
(86) International application number: PCT/EP2018/085367
(87) International publication number: WO 2019/158259

(56) References cited:
- EP-A2- 2 633 475
- WO-A1-2005/017814
- US-A- 5 568 715
- US-A1- 2012 280 075
- US-A1- 2016 005 160

## Description

### TECHNICAL FIELD OF THE INVENTION

The invention relates to an apparatus and a method for detecting, in particular, the outline, the orientation and the location of a three-dimensional product resting by gravity on a work surface in one of two possible positions, which are an upright position or an upside-down position.

The invention relates more particularly to the sorting and storing of blister-packs for ophthalmic lenses, also called contact lenses.

### BACKGROUND OF THE INVENTION

An example of such a blister-pack design is described and shown in document US-5.609.246, which relates to a blister-pack for an ophthalmic lens with a lower part with a general shape of a hollow shell that is open in its upper face and a top lid for covering and closing a hollow chamber comprising the ophthalmic lens and a sterile preservation solution.

The upper covering and closing lid is substantially flat and sealed in a removable fashion on the lower shell.

The lower shell is generally made of a transparent or translucent plastic, whereas the upper lid is, for example, made of aluminium foil that prevents, in particular, the passage of light.

The design of this type of blister-pack is such that it is normally configured to rest "upright" on a substantially horizontal surface, with its lower shell resting on this surface, and its upper covering and closing lid oriented upwards.

The upper closing and covering lid is roughly flat so that the blister-pack can also rest in an "upside down" position on said horizontal surface, with its shell oriented upwards.

These blister-packs feature many variants in terms of design, dimensions and shape, so that, when viewed from above, they have different peripheral outlines, the outline corresponding substantially to that of the upper peripheral edge of the lower shell and, by complementarity, to that of the upper covering and closing lid.

Therefore, the outline can be rectangular with rectilinear sides, rectangular with two rounded convex opposite side, generally elliptical, etc.

For each blister-pack it is therefore possible to identify a specific outline as well as a main axis enabling determination of the angular orientation of the blister-pack about a vertical axis.

On its free upper face, the upper covering and closing lid features a list of information, of data and of decorative elements that are specific to each blister-pack, and that constitutes a set of individual information that enables identification of each blister-pack.

When the blister-pack is resting in an upright position, the visible information can, in particular, comprise an identification bar code, a commercial brand, an alphanumerical identification relating to the type of ophthalmic lens contained in the blister-pack, the ophthalmic correction parameters, the expiry date, etc.

It is therefore possible to consider identifying individually and in an automated manner any blister-pack, in particular by "reading" at least a part of this information.

In order to automate the various steps of sorting, storing, batch-preparation, shipping, etc. it has been necessary to implement automated and robotised installations that require the ability to use, reliably, means to store and transfer the concerned blister-packs.

It appears that the automated handling and treatment, as well as the storage of this type of product are made particularly complex by its design and the variety of its shapes and dimensions.

This is, in particular, the case when the purpose is the automated sorting of bulk batches of such blister-packs to subsequently place each blister-pack upright in a transport and storage receptacle, open in its top part, the receptacle having the smallest possible dimensions to allow the storage of the largest amount possible of sorted and individualised blister-packs in a storage facility.

Each receptacle is delimited by several vertical walls that retain laterally a blister-pack placed on the bottom wall, and the outer face of at least one of the side walls features an identification marking of the receptacle, in particular by optical reading.

Furthermore, these operations of sorting and pairing each blister-pack with a receptacle must be conducted at a high frequency, for example of more than a thousand blister-packs per hour.

Document US5568715 proposes determining whether each automatically-filled blister-pack actually contains an ophthalmic lens, using an image-analysis method of each blister-pack by transparent illumination through the translucent shell to achieve maximum contrast and uniformity, each blister-pack having been positioned upright in a known position with respect to a support, itself arranged in a known and fixed position with respect to the image acquisition means. This document does not provide any information relating to the processing of bulk batches of blister-packs.

US 2016/005160 A1 relates to an optical inspection system for packages containing medicaments, comprising a transparent photographing stage, a camera arranged above the stage, and front-side and back-side illumination for acquiring multiple images of a package placed on the stage.

### SHORT SUMMARY OF THE INVENTION

The invention proposes a method according to claim 1.

The invention proposes an apparatus according to claim 8.

According to other characteristics of the apparatus:
- the means to produce a first image and the means to analyse this first acquired image enables determination of the orientation from a top view of the product and/or of its geometric centre of gravity;
- the means to produce a first image and the means to analyse this first acquired image enables determination of the location of the product on the work surface;
- the means to produce a second image and the means to analyse this second acquired image enables determination of the orientation from a top view of the product and/or of its geometric centre of gravity;
- the means to produce a second image and the means to analyse this second acquired image enables determination of the location of the product on the work surface;
- the means to produce a second image and the means to analyse this second acquired image enables identification of at least some information among the individualised information relating to the product that is visible when the product is in an upright position;
- the means to produce the first image comprises a transparent or translucent work surface, and a first source for lighting underneath the product through the work surface, and the means to acquire this first image comprising a top camera arranged above the work surface;
- the means to acquire a second top view image of the product comprises a camera arranged above the work surface;
- the means to acquire a first image and the means to acquire a second top view image of the product comprises a shared camera arranged above the work surface;
- the means to produce a second image comprise a second light source above the product resting on the work surface;
- the work surface belongs to a vibrating plate controlled to vary the position of the product on the work surface;
- the surface comprises a controlled articulated arm for gripping of a product comprising means to change the angular orientation of the gripped product by rotation about a vertical axis;
- the apparatus comprises a station where the product is deposited in a transport receptacle, after the step whereby the articulated arm grips the product and corrects its orientation;
- the apparatus comprises the means to successively control the means to acquire a first image, then the means to acquire a second image and to repeat this successive command after each operation whereby a product is gripped by the articulated arm;
- the product is a blister-pack containing an ophthalmic lens and comprising a lower shell and an upper closing lid.

### BRIEF DESCRIPTION OF THE FIGURES

Other characteristics and advantages of the invention will be made clearer upon reading the following detailed description, with reference to the appended drawings, in which:
- figure 1 is a schematic and perspective view of the main components of an embodiment example of an apparatus according to the invention;
- figure 2 is a view similar to that of figure 1, which shows some of the components of figure 1;
- figure 3 is a schematic and perspective top view of an example of a blister-pack for an ophthalmic lens shown in the "upright" position;
- figure 4 is a perspective view similar to that of figure 3 wherein the blister-pack is shown in the "upside down" position;
- figure 5 is a top view of the blister-pack shown in figure 3;
- figure 6 is an example of a first image acquired according to the invention showing a series of blister-packs to be sorted and stored;
- figure 7 is an example of a second image acquired according to the invention showing the same series of blister-packs as that shown in figure 6, in the same positions, orientations, and locations;
- figure 8 is a schematic and perspective view that shows the apparatus of figure 1 associated with an adjacent conveyor for the transport and storage of receptacles for blister-packs with a handling articulated and robotised arm;
- figure 9 is a schematic and perspective view of the conveyor of figure 8 with two receptacles each containing one blister-pack;
- figure 10 is a top view of a receptacle containing a blister-pack of the same type as that shown in figures 3 to 5;
- figure 11 is a schematic cross-section view of the main components of the installation shown in figure 2.

### DETAILED DESCRIPTION OF THE FIGURES

In the following description, elements featuring identical structures or similar functions are designated by the same references.

In the following description, the longitudinal, vertical and transversal orientations are designated by the "L, V, T" trihedron of the figures. A horizontal plane is thereby defined and extends longitudinally and transversally. The longitudinal axis is oriented from the back to the front.

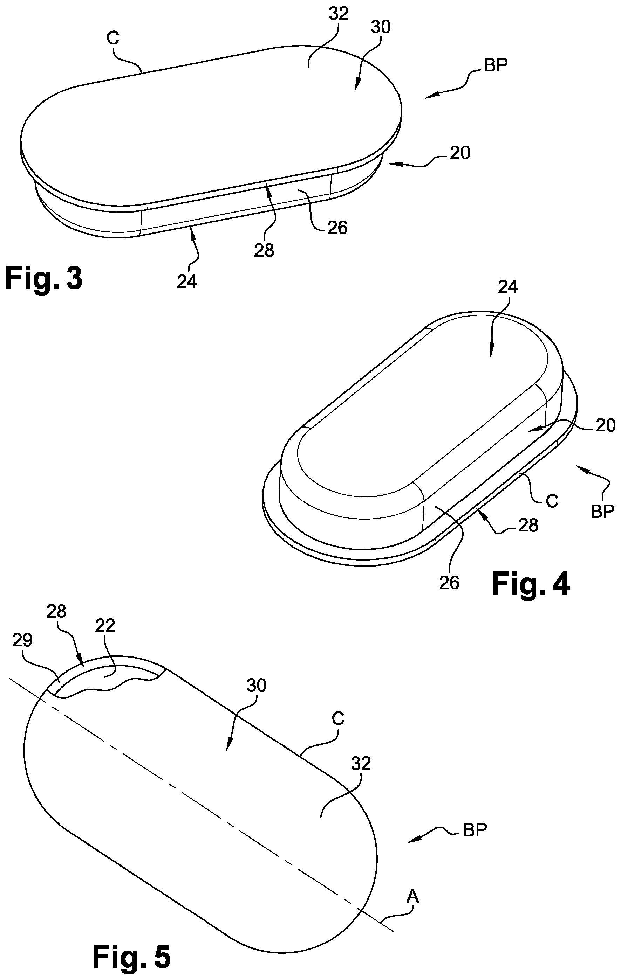

Figures 3 to 5 show an example of a blister-pack BP for an ophthalmic lens constituted of a lower shell 20 made of a transparent or translucent plastic material that delimits a lower chamber 22, in this case delimited by a flat lower wall 24 configured to rest on a horizontal surface, and by a side wall 26.

The side wall 26 is extended by a peripheral annular upper edge 28 that extends in a horizontal plane and that delimits an open flat horizontal upper face 29 of the lower shell 20.

This open upper face 29 is closed by a lid 30 that is glued and removable to access the ophthalmic lens contained in the chamber 22.

The lid 30 comprises an external upper face 32 that is substantially flat.

The side profile of the edge 28 defines the outline C of the blister-pack BP from a top view, as shown in figure 5.

From a top view, the blister-pack BP is therefore characterised by the shape and dimensions of its outline C, and by the surface delimited by its outline C.

The outline C in this case has a general rectangular shape with substantially semi-circular convex rounded opposite smaller sides.

The outline C features a main axis A that is in this case an axis of symmetry.

Other geometric and physical parameters of a blister-pack, such as the blister-pack BP, comprise its weight, its geometric centre of gravity, etc.

For the purpose of simplifying representation in figures 3 and 5, the outline or the peripheral edge of the lid 30 corresponds, in this case, exactly to the outline C of the blister-pack BP.

However, the dimensions of the lid 30 can be slightly smaller than that of the peripheral annular edge 28 so that there is a clearance between these two outlines, for example along the perimeter of the lid 30.

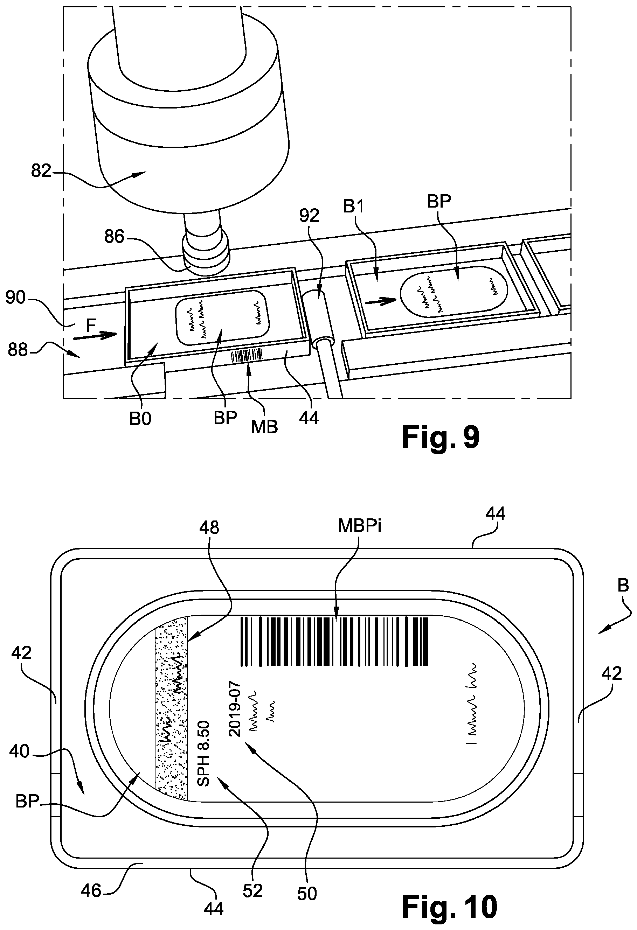

Figure 10 shows a receptacle B for the transport, transfer, and storage of an individualised blister-pack BPi, which is, in this case, a blister-pack similar to the blister BP that has just been described.

The dimensions of the receptacle B are such that it is configured to contain any type of blister-pack to be stored in an automated manner.

The receptacle B is, for example, a unit formed by moulding of a plastic material and it has a rectangular cuboid shape.

The receptacle B comprises a bottom wall 40 and four side walls 42 and 44, by pairs of opposite walls.

The upper face 46 of the receptacle B is vertically open upwards so as to allow the introduction of a blister-pack vertically from the top.

At least one of the vertical side faces, in this case a greater face 44, comprises an individualised identification marking of the receptacle B, here in the form of a bar code MB that can be read, in a known manner, by any camera designed for that purpose.

As can also be seen in figure 10, the upper face 32 of the lid 30 of the blister-pack BPi housed in the receptacle B comprises various information relating to the blister-pack and its content, in particular including, but not limited to, the following: a bar code MBPi; the commercial brand 48 of the manufacturer; the expiry date 50 for the use of the ophthalmic lens; the data 52 relating to the optical and dimensional characteristics of this ophthalmic lens; etc.

Each blister-pack BPi therefore comprises an individualised marking in the form of a bar code MBPi, which, together with the bar code MB of the receptacle B enables an unequivocal pairing of a blister-pack BPi with a receptacle B to which it is associated for the duration of storage.

In other words, the reading of the marking MB of the receptacle B also enables identification of the blister-pack BPi it contains, to which it was paired during the "filling" of the receptacle B with said blister-pack BPi.

For the automated filling of a receptacle with a blister-pack from a bulk batch of blister-packs of all types and models, they have to be taken one-by-one and individually recognised, to associate each gripped blister-pack with a receptacle.

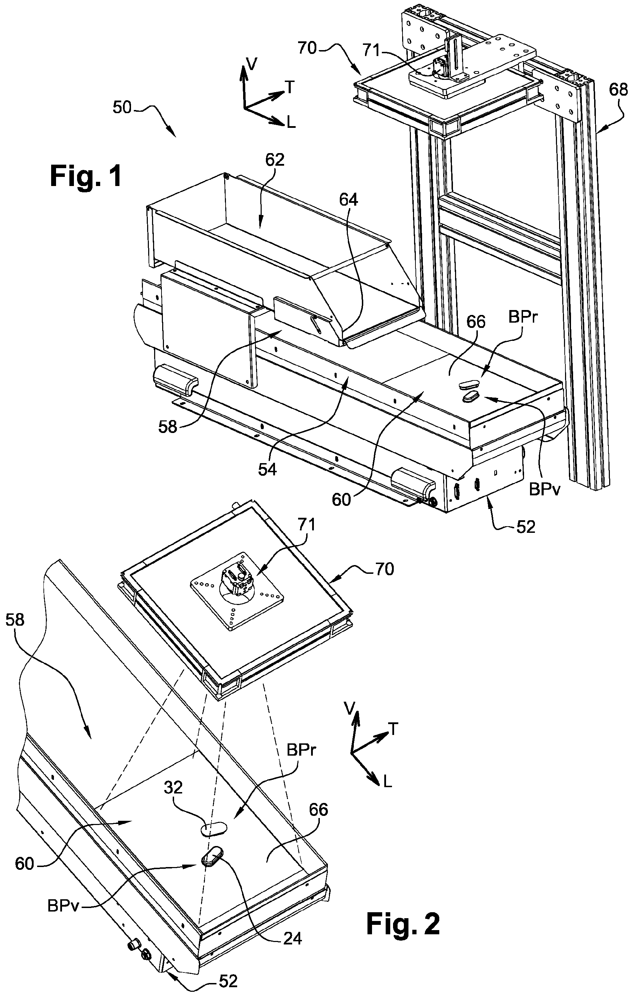

For this purpose, the invention proposes an apparatus such as that shown, in particular, in figures 1, 2 and 11.

Figures 1 and 2 show an apparatus 50 according to the invention that enables selecting and individually gripping blister-packs BPi from a bulk batch of blister-packs to be sorted, for the purpose of subsequently pairing each gripped blister-pack with an associated storage receptacle.

The apparatus 50 comprises a lower supporting frame 52 that carries a work table 54 above which the main components, units and subunits of the apparatus are arranged.

The work table 54 extends globally longitudinally and essentially comprises a rear section 58 and a front section 60.

The invention also comprises a vibrating storage hopper 62 that is arranged vertically above the rear section 58 of the lower work table 54.

The storage hopper 62 is configured to receive the batch bulk of blister-packs and its front-end face 64 is open to enable, in a known manner, to progressively evacuate, in limited quantities, a series of blister-packs that leave the hopper 62, falling vertically out of the hopper 62.

The front section 60 of the lower work table 54 is a work tray that comprises an upper work surface 66 with a rectangular shape, which, when the work tray is stopped, extends in a horizontal plane.

The work table 54 comprises means - not shown - to vibrate the work tray 60 so as to "shake" the blister-packs resting on the work surface 66, in particular to turn them over.

Indeed, as seen in figures 1 and 2, a blister-pack can be placed in the upright position (BPr) or be placed upside down (BPv).

When the work tray 60 is vibrated, the blister-packs "jump" and fall onto the work surface 66 in one or the other of the two positions, upright or upside down.

The vibrating of the work tray 60 also enables distribution of a series of blister-packs - which have fallen from the hopper 62 - on the work surface 66.

The apparatus 50 also comprises a side support frame 68 that is arranged here along one of the longitudinal sides of the lower frame 52.

At its upper end, the side frame 68 supports a horizontal upper plate 70.

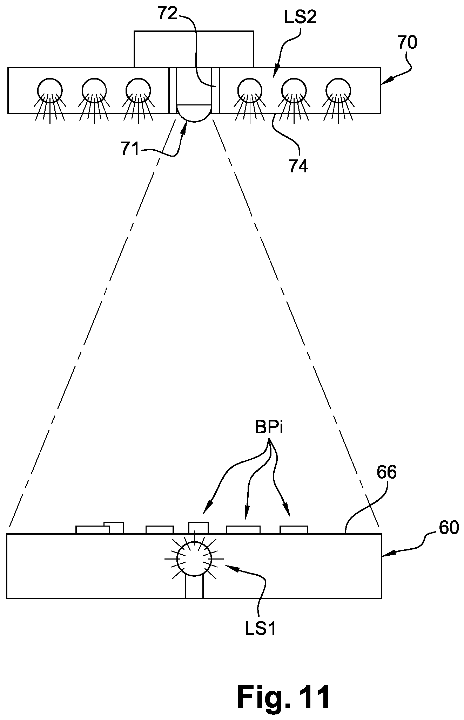

As can be seen in figures 2 and 11, in its centre, the upper plate 70 carries a camera 71 for image acquisition purposes, which, through a central hole 72, enables acquisition (or capture) of digital pictures from a top view of the work surface 66, which is delimited by a square (or rectangular) perimeter; the field of view of the camera corresponding to the dimensions of the work surface 66.

As shown schematically in figure 11 and, according to the invention, to allow the acquisition of images for the purpose of capturing in succession two different images of the work surface and the blister-packs it supports, the work surface 66 is transparent or translucent and it can be illuminated from below, by means for example of a first controlled light source LS1 that is arranged inside the work tray 60.

The first light source LS1 is controlled in a synchronised manner with the camera 71 to generate a light "flash" from underneath the work surface 66 and the corresponding acquisition of a first image IM1.

According to the invention, to allow the acquisition of images aiming at capturing successively two different images of the work surface and the blister-packs it supports, the upper plate 70 houses a second controlled light source LS2, which is arranged inside the upper plate and illuminates from above the work surface 66, here for example through the lower wall 74 of the upper plate 70, which is transparent.

The second light source LS2 is controlled in a synchronised manner with the camera 71 to generate a light "flash" from above the work surface 66 and the corresponding acquisition of a second image IM2.

To individually take each blister-pack BPr placed in the upright position on the work surface 66, the apparatus also comprises an articulated and robotised arm 80, for example of the type described and shown in document EP-B1-1.188.863.

Its design enables it to carry, at its free end, a gripping head 82 comprising, in particular, a suction cup 84 for the gripping of a facing blister-pack, in a controlled manner and by suction, and evidently for the release of a product that has been gripped or captured by the suction cup.

Furthermore, the gripping head 82 is able to move vertically in both directions under the effect of a cylinder with a vertical rod 86.

The design of the robotised arm 80 enables movement of the gripping head 82 in a horizontal plane and, in particular, to any precise location above the work surface 66, in particular to bring the gripping head 82 on top of a blister-pack that is to be gripped or captured.

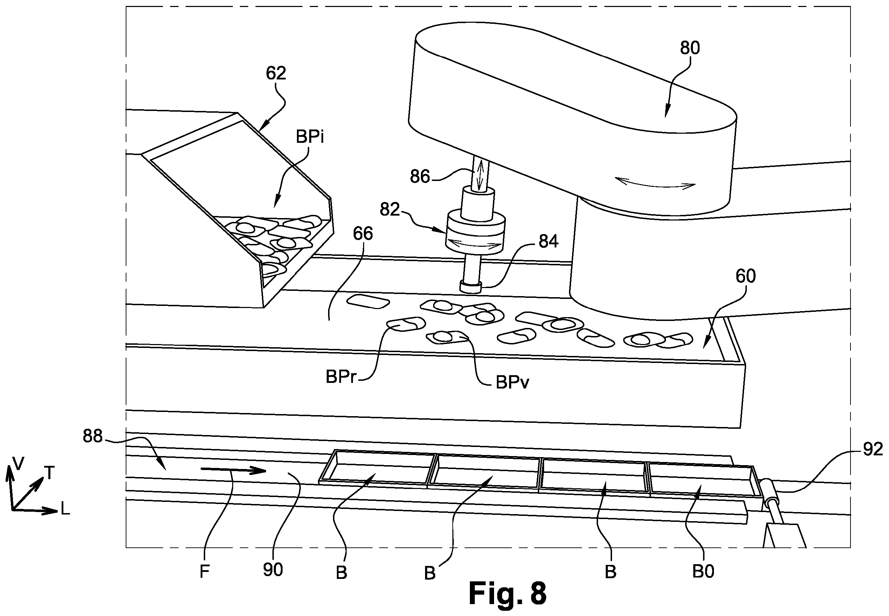

As can be seen in figure 8, along the longitudinal side of the lower frame opposite the side frame 68, the apparatus 50 comprises a horizontal conveyor 88 with a conveyor belt 90 travelling longitudinally from back to front following the direction of arrow F.

The conveyor 88 carries and guides a series of receptacles B to be filled, individually, with a blister-pack.

The station where a receptacle is filled - or where a blister-pack is placed in a receptacle - corresponds to the position of the receptacle B0, located furthest to the right, and immobilised in a controlled manner in this position. The immobilisation or stopping in this filling position of a receptacle is performed by blocking, in a longitudinal position, by a controlled sliding transversal finger 92.

After having been filled with a blister-pack at the station "B0", the receptacle is released by the finger 92 and then travels in a longitudinal forward direction to a B1 position and beyond, to another station, not shown, comprising a side camera for the identification of the receptacle, and a top camera, for the identification of the blister-pack contained in the receptacle B.

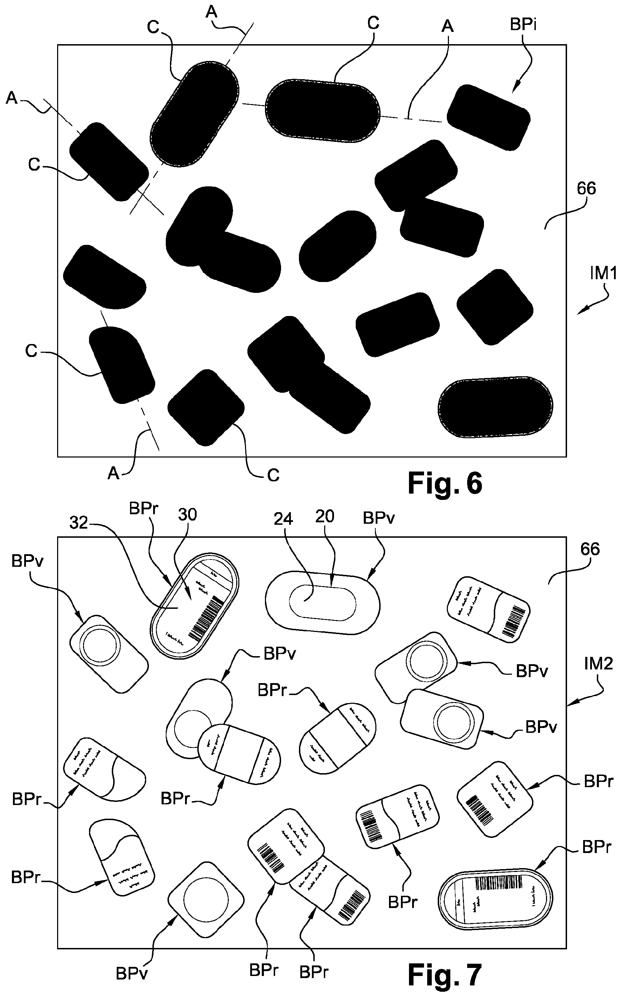

As can be seen in figure 6, the first captured image IM1 is obtained by illumination from below of a series of seventeen blister-packs that have been poured onto the work surface 66 from the hopper 62 and that have been randomly distributed in terms of their location on the surface, in terms of their upright or upside down position, and in terms of their orientation.

In these conditions, the image acquisition with "backlighting" provides a first "black and white" image IM1 that reveals the continuous, accurate and exact outline C of each blister-pack, with the exception of overlapping blister-packs (here in the form of three overlapping blister-packs).

A step is performed whereby the outline C of the blister-pack BPi is recognised by analysis of this first image IM1.

The analysis of this first digital image IM1 using known and conventional image analysis methods can allow - at least for blister-packs that do not overlap - to conduct a comparison with data contained in a database to recognise each blister-pack.

For each known model of blister-pack to be sorted, the database contains data comprising, in particular, its geometric outline C from a top view, with its dimensions, an orientation and position of the main axis with respect to the outline C, the surface delimited by the outline C, the geometric centre of gravity of the blister-pack, etc.

Regardless of the need to rely on this database, and given the precision of the first image IM1 in "black and white", an analysis of this first image enables, for each blister-pack, calculation of its geometric centre of gravity, the orientation of its main axis A and its location in the plane of the image.

Therefore, a step is performed whereby the orientation, from a top view, of the blister-pack BPi and/or its geometric centre of gravity is determined.

A step is therefore performed whereby the location of each blister-pack BPi is determined on the work surface 66.

When the analysis of the first image is completed, each blister-pack thereby recognised is recorded as a blister-pack to grip on the work surface 66, along with its various geometric data.

Unrecognised blister-packs are then evacuated from the work surface 66.

However, the analysis of the first image IM1 does not enable determination of whether a recognised blister-pack is in an upright position or in an upside-down position.

Therefore, the method for determining the position and orientation of each blister-pack in an upright position requires a second image acquisition enabling capture of a second digital image IM2, such as that shown in figure 7.

This second image IM2 is obtained by illuminating from above the series of seventeen blister-packs that have been poured onto the work surface 66, and without their positions, locations, orientations etc. having been changed since the acquisition of the first image IM1.

As is shown schematically in figure 6, the lighting conditions from above the work surface 66 of the blister-packs present on the surface are such that the outlines of each blister-pack can be "blurred", and even "not visible". This is due to the constitution of the blister-packs and the materials used for the lower shell 20 and for the lid 30 which, among other factors, result in reflection phenomena that are detrimental to the accuracy of the image.

However, the analysis of the second image IM2 enables easily determining whether each blister-pack - which has already been recognised - is in an "upright" position or in an "upside down" position.

A step is therefore performed whereby the upright or upside-down position of the blister-pack BPi is determined by analysis of this second image IM2.

The analysis step of the second image IM2 enables performing a step whereby at least some information among the individualised information relating to the blister-pack BPi that is visible when the product is in an upright position is identified;

Therefore, following this double successive analysis of two acquired images IM1 and IM2, the processing and analysis means of the images enables determination of a set of eleven "upright" blister-packs BPr that are gripped by suction by means of the suction cup 84 that will cooperate with the substantially-flat external upper face 32 of the lid 30.

Inversely, the double analysis of the images enables determination of the set of six "upside down" blister-packs BPv that cannot be gripped by suction by means of the suction cup 84 because of the complex and irregular profile of the lower shell 24 oriented upwards.

Furthermore, for each recognised and upright blister-pack BPr its geographic location and angular orientation in the plane of its main axis, and possibly the position of its geometric centre of gravity, are known.

If these parameters are not determined during the analysis of the first image IM1, they can be determined during the processing and analysis of the second captured image IM2.

The processing of a series of blister-packs on the work surface 66 can then continue by means of the articulated robotised arm 80 that will grip or capture individually and successively each of the blister-packs BPr in the upright position, or at least those among these BPr blister-packs that do not overlap.

In addition to the transfer of each blister-pack above an empty receptacle "B0" as shown in figure 8, the gripping head 82 performs an angular reorientation of the gripped blister-pack so that its main axis is oriented substantially in parallel with the greater longitudinal dimension of the receptacle, before the blister-pack is deposited in the receptacle.

Optionally, between each individual gripping of a blister-pack, the step of acquiring two successive images IM1 and IM2 can be repeated to verify that the gripping of the blister-pack has not caused changes to the other blister-packs of the series being processed.

When the recognised blister-pack gripping operations are completed, the remaining blister-packs that are on the work surface 66 are shaken, in particular to cause them to turn over, so that a new group of "upright" blister-packs can be obtained.

When it is deemed that the number of blister-packs remaining on the work surface is insufficient 66, the pouring of a new series of blister-packs BPr and BPv is performed onto the work surface 66.

Each blister-pack housed in its associated receptacle is then brought to the station, not shown, comprising a side camera for the identification of the receptacle and a top camera for the identification of the blister-pack contained in the receptacle B. This identification is carried out by reading all or part of the various information relating to the blister-pack and to its content present on the upper face 32 of the lid 30 (bar code MBPi; commercial brand 48 of the manufacturer; expiry date 50; data relating to the optical and dimensional characteristics of the lens, etc.).

## Claims

1. A method for determining the outline (C) and the location of a three-dimensional product (BPi), that is a blister-pack comprising a lower shell (24) and an upper closing lid (30) and containing an ophthalmic lens, resting by gravity on a work surface (66) in one of two possible positions, which are:
* an upright position (BPr) with its lower shell (24) resting on this work surface (66) and its upper covering and closing lid oriented upwards;
* or an upside-down position (BPv) with its lower shell (24) oriented upwards, the method comprising:
- a step of acquiring a first image (IM1) enabling determination of at least the outline (C) of the product that is defined by the peripheral outer edge (28) of the lower shell or of the upper closing lid (30) in a top view of the product (BPi), this step of acquiring a first image (IM1) being achieved by illuminating the product (BPi) from below through a transparent or translucent work surface (66) by means of a first source (LS1) for underneath lighting the product (BPi) through the work surface (66), and by acquiring this first image (IM1) by means of a top camera (71) arranged above the work surface (66);
- a step of analysing this first image (IM1) to recognise the outline (C) of the product (BPi);
- a step of acquiring a second image (IM2) of a top view of the product (BPi) that is achieved by illuminating the product (BPi) from above, and by acquiring this second image (IM2) by means of a camera (71) arranged above the work surface (66);
- a step of analysing this second image (IM2) to determine the upright or upside-down position of the product (BPi).

2. A method according to claim 1, **characterised in that** the analysis step of the first image (IM1) enables determination of the orientation from the top view of the product (BPi) and/or its geometric centre of gravity.

3. A method according to claim 1, **characterised in that** the analysis step of the first image (IM1) enables determination of the location of the product (BPi) on said work surface (66).

4. A method according to claim 1, **characterised in that** the analysis step of the second image (IM2) enables determination of the orientation from the top view of the product (BPi) and/or its geometric centre of gravity.

5. A method according to claim 1, **characterised in that** the analysis step of the second image (IM2) enables determination of the location of the product (BPi) on said work surface (66).

6. A method according to claim 1, **characterised in that** the analysis step of the second image (IM2) enables identification of at least some information among the individualised information (MBPi, 48, 50, 52) relating to the product (BPi) that is visible when the product (BPi) is in an upright position.

7. A method according to claim 1, **characterised in that** the step of acquiring the first image (IM1) and the step of acquiring the second image (IM2) are achieved by image acquisition using a shared top camera (71) arranged above the work surface (66).

8. Apparatus (50) for the implementation of the method according to one of the preceding claims, for determining the outline (C) and the location of the said three-dimensional product (BPi) resting by gravity on a work surface (66) in one of its said two possible positions, which are an upright position (BPr) or an upside-down position (BPv), the apparatus (50) comprising:
- means to produce a first image (IM1) enabling determination of at least the outline (C) of the product (BPi);
- means (71) to acquire this first image (IM1);
- means to analyse this first acquired image (IM1) to recognise the outline (C) of said product (BPi);
- means (71) to produce a second top view image (IM2) of the product (BPi);
- means (71) to acquire this second image (IM2);
- means to analyse this second image (IM2) to determine the upright or upside-down position of the product (BPi).

9. An apparatus (50) according to claim 8, **characterised in that** the means to produce a first image (IM1) and the means to analyse this first acquired image (IM1) enable determination of the orientation from a top view of the product (BPi) and/or of its geometric centre of gravity, and enables determination of the location of the product (BPi) on said work surface (66).

10. An apparatus (50) according to claim 8, **characterised in that** the means to produce a second image (IM2) and the means to analyse this second acquired image (IM2) enables identification of at least some information among the individualised information (MBPi, 48, 50, 52) relating to the product (BPi) that is visible when the product is in an upright position.

11. An apparatus (50) according to claim 8, **characterised in**
**that** the means to produce a second image (IM2) and the means to analyse this second acquired image (IM2) enables determination of the orientation from a top view of the product (BPi) and/or of its geometric centre of gravity, and enables determination of the location of the product (BPi) on said work surface (66).

12. An apparatus (50) according to claim 8, **characterised in that** the means to produce the first image (IM1) comprises a transparent or translucent work surface (66), and a first source (LS1) for underneath lighting the product (BPi) through the work surface (66), and **in that** the means to acquire this first image (IM1) comprises a top camera (71) arranged above the work surface (66).

13. An apparatus (50) according to claim 8, **characterised in that** the work surface (66) belongs to a vibrating plate (60) controlled to vary the position of the product (BPi) on the work surface (66).

14. An apparatus (50) according to claim 8, **characterised in that** it comprises a controlled articulated arm (80) for gripping a product (BPi) comprising means to change the angular orientation of the gripped product (BPi) by rotation about a vertical axis.

15. An apparatus (50) according to claim 14, **characterised in that** it comprises the means to successively control the means to acquire a first image (IM1), then the means to acquire a second image (IM2) and to repeat this successive command after each operation whereby a product (BPi) is gripped by said articulated arm (80).

16. An apparatus (50) according to claim 8, **characterised in that** the means to acquire a second top view image (IM2) of the product (BPi) comprises a camera (71) arranged above the work surface (66).

17. An apparatus (50) according to claim 16 taken in combination with claim 12, **characterised in that** the means to acquire a first image (IM1) and the means to acquire a top view image (IM2) of the product (BPi) comprises a shared camera (71) arranged above the work surface (66).

18. An apparatus (50) according to claim 16, **characterised in that** the means to produce a second image (IM2) comprises a second light source (LS2) above the product (BPi) resting on the work surface (66).

19. An apparatus (50) according to claim 14, **characterised in that** it comprises a station where the product (BPi) is deposited in a transport receptacle (B), after the step whereby said articulated arm (80) grips the product and corrects its orientation.

20. An apparatus (50) according to claim 14, **characterised in that** it comprises the means to successively control the means to acquire a first image (IM1), then the means to acquire a second image (IM2) and to repeat this successive command after each operation whereby a product (BPi) is gripped by said articulated arm (80).

## Patentansprüche

1. Verfahren zur Bestimmung der Kontur (C) und der Lage eines dreidimensionalen Produkts (BPi), nämlich einer Blister Verpackung, die eine untere Schale (24) und einen oberen Verschlussdeckel (30) umfasst und eine Augenlinse enthält, die durch die Schwerkraft auf einer Arbeitsfläche (66) in einer von zwei möglichen Positionen ruht, nämlich:
* einer aufrechten Position (BPr), in der die untere Schale (24) auf dieser Arbeitsfläche (66) aufliegt und der obere Verschlussdeckel nach oben zeigt;
* oder eine umgedrehte Position (BPv), wobei die untere Schale (24) nach oben zeigt,
wobei das Verfahren umfasst:
- einen Schritt zum Aufnehmen eines ersten Bildes (IM1), das es ermöglicht, zumindest die Kontur (C) des Produkts zu bestimmen, die durch den äußeren Umfangsrand (28) der unteren Schale oder des oberen Verschlussdeckels (30) in einer Draufsicht auf das Produkt (BPi) definiert ist, wobei dieser Schritt der Aufnahme eines ersten Bildes (IM1) durchgeführt wird, indem das Produkt (BPi) von unten durch eine transparente oder durchscheinende Arbeitsfläche (66) mittels einer ersten Lichtquelle (LS1) beleuchtet wird, die dazu bestimmt ist, das Produkt (BPi) von unten durch die Arbeitsfläche (66) zu beleuchten, und durch Aufnehmen dieses ersten Bildes (IM1) mittels einer oberhalb der Arbeitsfläche (66) angeordneten oberen Kamera (71);
- einen Schritt, der darin besteht, dieses erste Bild (IM1) zu analysieren, um die Kontur (C) des Produkts (BPi) zu erkennen;
- einen Schritt, der darin besteht, ein zweites Bild (IM2) einer Draufsicht auf das Produkt (BPi) zu erfassen, das durch Beleuchtung des Produkts (BPi) von oben erhalten wird, und dieses zweite Bild (IM2) mittels einer oberhalb der Arbeitsfläche (66) angeordneten Kamera (71) aufzunehmen;
- einen Schritt, der darin besteht, dieses zweite Bild (IM2) zu analysieren, um festzustellen, ob sich das Produkt (BPi) in aufrechter Position oder auf dem Kopf stehend befindet.

2. Verfahren nach Anspruch 1, **dadurch gekennzeichnet, dass** der Schritt der Analyse des ersten Bildes (IM1) es ermöglicht, die Ausrichtung anhand der Draufsicht auf das Produkt (BPi) und/oder dessen geometrischen Schwerpunkt zu bestimmen.

3. Verfahren nach Anspruch 1, **dadurch gekennzeichnet, dass** der Schritt der Analyse des ersten Bildes (IM1) die Bestimmung der Position des Produkts (BPi) auf der Arbeitsfläche (66) ermöglicht.

4. Verfahren nach Anspruch 1, **dadurch gekennzeichnet, dass** der Schritt der Analyse des zweiten Bildes (IM2) die Bestimmung der Ausrichtung des Produkts (BPi) in der Draufsicht und/oder seines geometrischen Schwerpunkts ermöglicht.

5. Verfahren nach Anspruch 1, **dadurch gekennzeichnet, dass** der Schritt der Analyse des zweiten Bildes (IM2) die Bestimmung der Position des Produkts (BPi) auf der Arbeitsfläche (66) ermöglicht.

6. Verfahren nach Anspruch 1, **dadurch gekennzeichnet, dass** der Schritt der Analyse des zweiten Bildes (IM2) es ermöglicht, zumindest bestimmte Informationen aus den individualisierten Informationen (MBPi, 48, 50, 52) des Produkts (BPi) zu identifizieren, die sichtbar sind, wenn sich das Produkt (BPi) in aufrechter Position befindet.

7. Verfahren nach den Ansprüchen 7 und 8, **dadurch gekennzeichnet, dass** der Schritt der Aufnahme des ersten Bildes (IM1) und der Schritt der Aufnahme des zweiten Bildes (IM2) durch Erfassung mittels einer gemeinsamen, über der Arbeitsfläche (66) angeordneten oberen Kamera (71) durchgeführt werden.

8. Vorrichtung (50) zur Durchführung eines Verfahrens gemäß einem der vorstehenden Ansprüche zur dreidimensionalen Bestimmung der Kontur (C) und der Lage eines Produkts (BPi), das durch die Schwerkraft auf einer Arbeitsfläche (66) in einer von zwei möglichen Positionen, nämlich einer Position mit der Oberseite nach oben (BPr) oder einer Position mit der Oberseite nach unten (BPv), wobei diese Anlage (50) umfasst:
- Mittel zur Erzeugung eines ersten Bildes (IM1), das es ermöglicht, zumindest die Kontur (C) des Produkts (BPi) zu bestimmen;
- Mittel (71) zum Erfassen dieses ersten Bildes (IM1);
- Mittel zur Analyse dieses erfassten ersten Bildes (IM1), um die Kontur (C) des Produkts (BPi) zu erkennen;
- Mittel (71) zur Erzeugung eines zweiten Bildes (IM2) in der Draufsicht auf das Produkt (BPi);
- Mittel zum Erfassen dieses zweiten Bildes (IM2);
- Mittel zur Analyse dieses aufgenommenen zweiten Bildes (IM2), um die Position des Produkts (BPi) in aufrechter oder umgekehrter Lage zu bestimmen.

9. Vorrichtung (50) nach Anspruch 8, **dadurch gekennzeichnet, dass** die Mittel zur Erzeugung eines ersten Bildes (IM1) und die Mittel zur Analyse dieses aufgenommenen ersten Bildes (IM1) es ermöglichen, die Ausrichtung des Produkts (BPi) in der Draufsicht und/oder seinen geometrischen Schwerpunkt zu bestimmen, und es ermöglichen, die Position des Produkts (BPi) auf der Arbeitsfläche (66) zu bestimmen.

10. Vorrichtung (50) nach Anspruch 8, **dadurch gekennzeichnet, dass** die Mittel zur Erzeugung eines zweiten Bildes (IM2) und die Mittel zur Analyse dieses erfassten zweiten Bildes (IM2) es ermöglichen, zumindest bestimmte Informationen aus den individualisierten Informationen (MBPi, 48, 50, 52) bezüglich des Produkts (BPi) zu identifizieren, die sichtbar sind, wenn sich das Produkt in vertikaler Position befindet.

11. Vorrichtung (50) nach Anspruch 8, **dadurch gekennzeichnet, dass** die Mittel zur Erzeugung eines zweiten Bildes (IM2) und die Mittel zur Auswertung dieses erfassten zweiten Bildes (IM2) die Bestimmung der Ausrichtung des Produkts (BPi) in der Draufsicht und/oder seines geometrischen Schwerpunkts sowie die Bestimmung der Position des Produkts (BPi) auf der genannten Arbeitsfläche ermöglichen (66) zu bestimmen.

12. Vorrichtung (50) nach Anspruch 8, **dadurch gekennzeichnet, dass** die Einrichtung zur Erzeugung des ersten Bildes (IM1) eine transparente oder durchscheinende Arbeitsfläche (66) und eine erste Lichtquelle (LS1) umfasst, die dazu bestimmt ist, das Produkt (BPi) von unten durch die Arbeitsfläche (66) zu beleuchten, und dass die Einrichtung zur Aufnahme dieses ersten Bildes (IM1) eine oberhalb der Arbeitsfläche (66) angeordnete Kamera (71) umfasst.

13. Vorrichtung (50) nach Anspruch 8, **dadurch gekennzeichnet, dass** die Arbeitsfläche (66) zu einer Schwingplatte (60) gehört, die so gesteuert wird, dass sie die Position des Produkts (BPi) auf der Arbeitsfläche (66) verändert.

14. Vorrichtung (50) nach Anspruch 8, **dadurch gekennzeichnet, dass** sie einen gesteuerten Gelenkarm (80) zum Greifen eines Produkts (BPi) umfasst, der Mittel zum Verändern der Winkelausrichtung des gegriffenen Produkts (BPi) durch Drehung um eine vertikale Achse umfasst.

15. Vorrichtung (50) nach Anspruch 8, **dadurch gekennzeichnet, dass** sie Mittel umfasst, um nacheinander die Mittel zur Erfassung eines ersten Bildes (IM1) und anschließend die Mittel zur Erfassung eines zweiten Bildes (IM2) zu steuern und diese aufeinanderfolgende Steuerung nach jedem Greifvorgang eines Produkts (BPi) mittels des genannten Gelenkarms (80) zu wiederholen.

16. Anlage (50) nach Anspruch 8, **dadurch gekennzeichnet, dass** die Mittel zum Erfassen eines zweiten Bildes (IM2) des Produkts (BPi) in der Draufsicht eine über der Arbeitsfläche (66) angeordnete Kamera (71) umfassen.

17. Vorrichtung (50) nach Anspruch 16 in Verbindung mit Anspruch 12, **dadurch gekennzeichnet, dass** die Mittel zum Erfassen eines ersten Bildes (IM1) und die Mittel zum Erfassen eines Draufsichtbildes (IM2) des Produkts (BPi) eine gemeinsame Kamera (71) umfassen, die über der Arbeitsfläche (66) angeordnet ist.

18. Vorrichtung (50) nach Anspruch 16, **dadurch gekennzeichnet, dass** die Mittel zum Erzeugen eines zweiten Bildes (IM2) eine zweite Lichtquelle (LS2) umfassen, die über dem auf der Arbeitsfläche (66) liegenden Produkt (BPi) angeordnet ist.

19. Vorrichtung (50) nach Anspruch 14, **dadurch gekennzeichnet, dass** sie eine Station umfasst, an der das Produkt (BPi) in eine Transportaufnahme (B) abgelegt wird, nachdem der Gelenkarm (80) das Produkt ergriffen und dessen Ausrichtung korrigiert hat.

20. Anlage (50) nach Anspruch 14, **dadurch gekennzeichnet, dass** sie eine Station zum Ablegen eines Produkts (BPi) in eine Transportschale (B) umfasst, nachdem es ergriffen und seine Ausrichtung mittels des Gelenkarms (80) korrigiert wurde.

## Revendications

1. Procédé pour déterminer le contour (C) et la localisation d'un produit tridimensionnel (BPi), à savoir un emballage blister comprenant une coque inférieure (24) et un couvercle de fermeture supérieur (30) et contenant une lentille ophtalmique, reposant par gravité sur une surface de travail (66) dans l'une des deux positions possibles, à savoir :
* une position à l'endroit (BPr) avec sa coque inférieure (24) reposant sur cette surface de travail (66) et son opercule supérieur de fermeture orienté vers le haut ;
* ou une position à l'envers (BPv) avec sa coque inférieure (24) orientée vers le haut,
le procédé comprenant :
- une étape de prise de vue d'une première image (IM1) permettant de déterminer au moins le contour (C) du produit qui est défini par le bord extérieur périphérique (28) de la coque inférieure ou de l'opercule supérieur de fermeture (30) dans une vue de dessus du produit (BPi), cette étape de prise de vue d'une première image (IM1) étant réalisée en éclairant le produit (BPi) par le dessous à travers une surface de travail (66) transparente ou translucide au moyen d'une première source (LS1) destinée à éclairer le produit (BPi) par le dessous à travers la surface de travail (66), et en prenant cette première image (IM1) au moyen d'une caméra supérieure (71) agencée au-dessus de la surface de travail (66) ;
- une étape consistant à analyser cette première image (IM1) pour reconnaître le contour (C) du produit (BPi) ;
- une étape consistant à capter une deuxième image (IM2) d'une vue de dessus du produit (BPi), obtenue en éclairant le produit (BPi) par le haut, et en prenant cette deuxième image (IM2) au moyen d'une caméra (71) agencée au-dessus de la surface de travail (66) ;
- une étape consistant à analyser cette deuxième image (IM2) pour déterminer si le produit (BPi) est en position droite ou à l'envers.

2. Procédé selon la revendication 1, **caractérisé en ce que** l'étape d'analyse de la première image (IM1) permet de déterminer l'orientation à partir de la vue de dessus du produit (BPi) et/ou son barycentre géométrique.

3. Procédé selon la revendication 1, **caractérisé en ce que** l'étape d'analyse de la première image (IM1) permet de déterminer la localisation du produit (BPi) sur ladite surface de travail (66).

4. Procédé selon la revendication 1, **caractérisé en ce que** l'étape d'analyse de la deuxième image (IM2) permet de déterminer l'orientation en vue de dessus du produit (BPi) et/ou son barycentre géométrique.

5. Procédé selon la revendication 1, **caractérisé en ce que** l'étape d'analyse de la deuxième image (IM2) permet de déterminer la localisation du produit (BPi) sur ladite surface de travail (66).

6. Procédé selon la revendication 1, **caractérisé en ce que** l'étape d'analyse de la deuxième image (IM2) permet d'identifier au moins certaines informations parmi des informations individualisées (MBPi, 48, 50, 52) du produit (BPi) qui sont apparentes lorsque le produit (BPi) est en position à l'endroit.

7. Procédé selon les revendications 7 et 8, **caractérisé en ce que** l'étape de prise de vue de la première image (IM1) et l'étape de prise de vue de la deuxième image (IM2) sont réalisées par capture au moyen d'une caméra supérieure commune (71) agencée au-dessus de la surface de travail (66).

8. Installation (50) pour la mise en œuvre d'un procédé, selon l'une quelconque des revendications précédentes, de détermination du contour (C) et de la localisation d'un produit (BPi) en trois dimensions reposant par gravité sur une surface de travail (66) selon l'une ou l'autre de deux positions possibles dont une position à l'endroit (BPr) ou une position à l'envers (BPv), cette installation (50) comportant :
- des moyens pour produire une première image (IM1) permettant de déterminer au moins le contour (C) du produit (BPi);
- des moyens (71) pour capter cette première image (IM1) ;
- des moyens d'analyse cette première image (IM1) captée pour reconnaître le contour (C) dudit produit (BPi) ;
- des moyens (71) pour produire une deuxième image (IM2) en vue de dessus du produit (BPi) ;
- des moyens pour capter cette deuxième image (IM2) ;
- des moyens d'analyse cette deuxième image (IM2) captée pour déterminer la position à l'endroit ou à l'envers du produit (BPi)..

9. Installation (50) selon la revendication 8, **caractérisée en ce que** les moyens pour produire une première image (IM1) et les moyens d'analyse cette première image captée (IM1) permettent de déterminer l'orientation du produit (BPi) vue de dessus et/ou son barycentre géométrique, et permettent de déterminer la localisation du produit (BPi) sur ladite surface de travail (66).

10. Installation (50) selon la revendication 8, **caractérisée en ce que** les moyens pour produire une deuxième image (IM2) et les moyens d'analyse de cette deuxième image captée (IM2) permettent d'identifier au moins certaines informations parmi les informations individualisées (MBPi, 48, 50, 52) relatives au produit (BPi) qui sont apparentes lorsque le produit est en position verticale.

11. Installation (50) selon la revendication 8, **caractérisée en ce que** les moyens pour produire une deuxième image (IM2) et les moyens d'analyse cette deuxième image captée (IM2) permettent de déterminer l'orientation en vue de dessus du produit (BPi) et/ou de son barycentre géométrique, et permettent de déterminer la localisation du produit (BPi) sur ladite surface de travail (66).

12. Installation (50) selon la revendication 8, **caractérisée en ce que** le moyen pour produire la première image (IM1) comprend une surface de travail (66) transparente ou translucide, et une première source (LS1) destinée à éclairer le produit (BPi) par le dessous à travers la surface de travail (66), et **en ce que** le moyen de prise de vue de cette première image (IM1) comprend une caméra supérieure (71) agencée au-dessus de la surface de travail (66).

13. Installation (50) selon la revendication 8, **caractérisée en ce que** la surface de travail (66) appartient à un plateau vibrant (60) commandé pour faire varier la position du produit (BPi) sur la surface de travail (66).

14. Installation (50) selon la revendication 8, **caractérisée en ce qu'**il comprend un bras articulé commandé (80) destiné à saisir un produit (BPi), comprenant des moyens pour modifier l'orientation angulaire du produit saisi (BPi) par rotation autour d'un axe vertical.

15. Installation (50) selon la revendication 8, **caractérisée en ce qu'**elle comporte des moyens pour commander successivement les moyens pour capter une première image (IM1), puis les moyens pour capter une deuxième image (IM2) et pour réitérer cette commande successive après chaque opération de préhension d'un produit (BPi) au moyen dudit bras articulé (80).

16. Installation (50) selon la revendication 8, **caractérisée en ce que** les moyens permettant de capter une deuxième image en vue de dessus (IM2) du produit (BPi) comprennent une caméra (71) agencée au-dessus de la surface de travail (66).

17. Installation (50) selon la revendication 16, combinée avec la revendication 12, **caractérisée en ce que** les moyens pour capter une première image (IM1) et les moyens pour capter une image vue de dessus (IM2) du produit (BPi) comprennent une caméra commune (71) agencée au-dessus de la surface de travail (66).

18. Installation (50) selon la revendication 16, **caractérisée en ce que** les moyens pour produire une deuxième image (IM2) comprennent une deuxième source lumineuse (LS2) agencée au-dessus du produit (BPi) reposant sur la surface de travail (66).

19. Installation (50) selon la revendication 14, **caractérisée en ce qu'**elle comprend une station où le produit (BPi) est déposé dans un réceptacle de transport (B), après l'étape par laquelle ledit bras articulé (80) saisit le produit et corrige son orientation.

20. Installation (50) selon la revendication 14, **caractérisée en ce qu'**elle comporte un poste de dépose d'un produit (BPi) dans une barquette (B) de transport, après son appréhension et la correction de son orientation au moyen dudit bras articulé (80).
